# EUROPEAN PATENT APPLICATION

(11) **EP 4 595 836 A1**
(43) Date of publication of application: **06.08.2025**
(21) Application number: 23871168.3
(22) Date of filing: 25.09.2023
(51) Int. Cl.: A47J 37/06, A47J 43/046, A47J 43/07, A47J 43/08

(54) **BAKING DEVICE AND FOOD MAKING METHOD**

(30) Priority: 29.09.2022 CN 202211204123
(71) Applicant: Zhejiang Shaoxing Supor Domestic Electrical Appliance Co., Ltd, Shaoxing, Zhejiang 312017 (CN)
(72) Inventor: YANG, Baobin, Shaoxing, Zhejiang 312017 (CN); TANG, Lumeng, Shaoxing, Zhejiang 312017 (CN); LI, Yuyue, Shaoxing, Zhejiang 312017 (CN)
(74) Representative: LLR
(86) International application number: PCT/IB2023/059437
(87) International publication number: WO 2024/069346

(57) **Abstract**

A baking device and a food making method applied to a food processor comprising the baking device. The baking device comprises a housing assembly (10), a fan (30), a heating member (20), and a discharge assembly (40). The housing assembly (10) is provided with a baking cavity (11) having an opening (15) at the bottom and an airflow channel (12) located below the baking cavity (11). The fan (30) is provided at the end of the airflow channel (12) distant from the baking cavity (11). The airflow channel (12) is communicated with an air outlet side of the fan (30) and the bottom end of the baking cavity (11). The heating member (20) is provided in the airflow channel (12) and is located between the fan (30) and the baking cavity (11), and the heating member (20) is used for heating the baking cavity (11). The discharge assembly (40) is used for opening or closing the opening (15) of the baking cavity (11).

## Description

The present invention relates to the field of food processing, and in particular to a baking device, a food processor, a food preparation method, and a computer-readable storage medium.

With the continuous improvement in living standards, various types of food processors have appeared on the market. Current food processors, such as soy milk makers, mainly involve two main steps when preparing beverages of food: crushing and boiling. **In** the crushing step, a crushing blade rotates at high speed to crush an ingredient and mix it with water to form raw soymilk. **In** the boiling step, the raw soymilk is heated by a heating member to produce cooked soymilk that is drinkable. During boiling, in order to prevent overflow and sticking at the bottom, the machine cannot maintain continuous high-power heating. Instead, it must rely on intermittent heating or low-power heating, which prolongs the preparation time. Therefore, existing food processors have problems such as long food preparation time and a tendency to overflow.

The objective of the present invention is to provide a baking device, a food processor, a food preparation method, and a computer-readable storage medium, which can shorten food preparation time and reduce the risk of scorching the bottom.

**In** one aspect, the present invention provides a baking device. The baking device comprises: a housing assembly, provided with a baking chamber having an opening at the bottom end and an airflow channel located below the baking chamber; a fan, provided at an end of the airflow channel away from the baking chamber, the airflow channel connecting an outlet of the fan and the bottom end of the baking chamber; a heating member, provided in the airflow channel and located between the fan and the baking chamber, the heating member being configured to heat the baking chamber; and, a feeder assembly mounted in the housing assembly, the feeder assembly being configured to open and close the opening. Since the housing assembly is provided with the baking chamber, and hot airflow around the heating member is blown into the baking chamber by the fan to bake an ingredient in the baking chamber, the hot airflow can blow up the ingredients, causing them to flow, thereby achieving even heating with high heating efficiency. In addition, after baking is completed, the ingredients in the baking chamber can be released into a cup through the feeder assembly. In this way, during the food preparing process of the food processor, the ingredients can be baked by the baking device before being blended. In the cup, only blending and crushing of the ingredients are required, eliminating the need for prolonged boiling. This can effectively shorten the food preparation time of the food processor. Moreover, since prolonged boiling is unnecessary, even if the height of the cup is reduced, ingredient overflow can still be prevented, which is also conducive to making the cup shorter and smaller. In addition, since the airflow channel is located below the baking chamber and connects the air outlet side of the fan to the bottom end of the baking chamber, the hot airflow in the airflow channel enters the baking chamber from the bottom end of the baking chamber. Since the hot airflow has lower density, it tends to move upward after entering the baking chamber, so that the ingredient in the baking chamber can be heated more quickly and efficiently.

Further, the feeder assembly comprises a feeding baffle for opening or closing the opening, the feeding baffle comprising a plurality of air holes connecting the airflow channel and the baking chamber. In this way, by controlling the feeding baffle, the baked ingredients in the baking chamber can be discharged into the cup, rendering the operation convenient. In addition, the hot airflow enters the baking chamber through the air holes on the feeding baffle, which is equivalent to the hot airflow entering the baking chamber from the its bottom surface, resulting in better heating effect on the ingredients.

Further, the feeder assembly further comprises a baffle support and a driving mechanism, the feeding baffle being provided on the baffle support and the baffle support being rotatably connected to the housing assembly; the driving mechanism driving the baffle support to switch between a first state and a second state by rotation, the feeding baffle closing the opening when the baffle support is in the first state, and the feeding baffle opening the opening when the baffle support is in the second state. Thus, by driving the baffle support to switch between the first state and the second state via the driving mechanism, the opening can be closed or opened by the feeding baffle, rendering the operation convenient.

Further, the driving mechanism comprises a motor, a screw-slider assembly and a rod, the screw-slider assembly comprising a screw connected to the motor and a slider threaded to the screw, the rod being respectively connected with the slider and the baffle support at its two ends. Thus, the structure of the driving mechanism is simple and reliable.

Further, the housing assembly comprises a shell, an inner cylinder and an air duct, the shell comprising a first portion extending in a vertical direction and a second portion extending in a horizontal direction, the inner cylinder being provided within the first portion and forming the baking chamber, the air duct being provided in the second portion, the air duct defining and forming the airflow channel, the heating member being provided in the air duct, and the fan being provided at the end of the air duct. The fan blows the hot airflow generated by the heating member toward the first portion. Upon reaching the vertically-extending first section, the hot airflow will automatically rise, so as to quickly enter the baking chamber to bake the ingredients. This configuration improves the baking efficiency while maintaining rational structural design of the housing assembly.

Further, the shell comprises a discharge opening provided below the inner cylinder, the baffle support closing the discharge opening in the first state and the baffle support opening the discharge opening in the second state. Thus, by controlling the baffle support, ingredients in the baking chamber can be discharged into the cup.

Further, when the baffle support is switched to the second state by rotation, the feeding baffle is rotated together with the baffle support to form a guiding slope. Thus, during the process where ingredients flow out of the baking device from the opening and the discharge opening, the feeding baffle can further play a role of guiding the flow.

Further, the baffle support is arranged on the outer side of the air duct, the baffle support and the air duct being sealed by a first sealing ring, the baffle support in the first state and the air duct forming the airflow channel together. Thus, by creating a seal between the baffle support and the air duct by means of the first sealing ring, hot airflow is prevented from entering other areas of the baking device, which can ensure the baking efficiency for ingredients in the baking chamber.

Further, the heating member comprises a support formed by mica sheet and a heating wire wound around the support, an air passage for airflow to pass being provided between the support and the heating wire. By providing the air passage, it can be ensured that hot airflow smoothly reaches the baking chamber when being blown by the fan.

Further, the housing assembly further comprises an air outlet grille provided at one end of the first portion and an air inlet grille provided at one end of the second portion, the air outlet grille covering an opening on top of the inner cylinder, the air inlet grille being provided at the inlet side of the fan. By providing an air outlet grille and an air inlet grille, air circulation can be established in the housing assembly. This ensures continuous intake of fresh air through the air inlet grille into the airflow channel where it is heated by the heating member to form hot airflow. At the same time, hot airflow having heated the ingredients is discharged through the air outlet grille. Such a cycle improves the heating efficiency.

Further, the housing assembly further comprises an end cap detachably provided at one end of the first portion, the air outlet grille being sandwiched between the first portion and the end cap. Thus, by detaching the end cap and then removing the air outlet grille, ingredients can be easily added into the baking chamber through the top opening of the inner cylinder.

Further, the shell comprises a left half-shell and a right half-shell connected with the left half-shell, the left half-shell and the right half-shell being secured together by means of fixing rings and/or fasteners and/or clips. This half-shell configuration facilitates convenient mounting of the inner cylinder and the air duct into the shell.

Further, the baking device further comprises a cover, the cover being provided with a feeding hole corresponding to the discharge opening, and the vertical projection of the discharge opening on the cover being offset from the feeding hole. This spatial displacement prevents steam generated by hot water in the cup from entering the baking device through the discharge opening, thereby ensuring good safety of the baking device.

Further, the baking device further comprises a guide member, the guide member surrounding the discharge opening and the feeding hole. By providing the guide member, when feeding ingredients from the baking chamber into the cup, all the ingredients can be guided into the cup.

Further, the cover is provided with a locking assembly, the locking assembly comprising a locking member, a guiding member and an elastic reset member, the cover being provided with a through-hole, which correspondingly cooperates with the locking member, the locking member being telescopically provided in the guiding member, the elastic reset member exerting an elastic force on the locking member such that the locking member extends out of the through-hole of the cover and locks with the housing assembly. Thus, by providing the locking assembly, the cover and the housing assembly can be securely locked together, preventing the cover and the housing assembly from disengaging due to excessive vibration during the operation of the food processor, thereby rendering the food processor more stable and reliable during use.

Further, the housing assembly further comprises a temperature sensor and a coupler electrically connected to the temperature sensor, the temperature sensor extending into the inner cylinder, the coupler being fixed to the shell. This configuration enables real-time temperature monitoring in the baking chamber by means of the temperature sensor.

Further, the air holes have an area of between 0.5 square millimetres and 13 square millimetres. This dimensional range can prevent ingredients from leaking out of the air holes, while ensuring rapid hot airflow entering the baking chamber, thereby ensuring the baking efficiency.

Further, the airflow channel is arranged in a horizontal direction; or, the airflow channel is arranged in a vertical direction.

Another aspect of the present invention provides a food processor. The food processor comprises: a main machine; a cup mounted on the main machine, the cup being provided with a crushing assembly; and, the baking device as described above, provided to cover the cup, the baking device being configured to supply baked ingredients to the cup. Thus, during food preparation, the ingredients can be baked in the baking device before being blended. Thus, the cup only needs to blend and crush the ingredients. Therefore, no prolonged boiling is required, which significantly reduces the total food preparation time.

Another aspect of the present invention provides a food preparation method, applied to the food processor described above. The food preparation method comprises the following steps: controlling the baking device to bake ingredients in the baking chamber; controlling the baking device to feed the baked ingredients into the cup; controlling the crushing assembly to crush the baked ingredients provided by the baking device. With the food preparation method of the present invention, the ingredients can be baked by the baking device before being blended, and needs only to be blended and crushed in the cup by controlling the crushing assembly. Thus, no prolonged boiling is required. The food preparation method can significantly reduce the total food preparation time, and prevent overflow of ingredients by eliminating extended liquid heating phase.

Further, the step of controlling the baking device to bake ingredients in the baking chamber comprises: controlling the heating member and the fan to start working; controlling the temperature of the baking chamber to be between a first temperature threshold and a second temperature threshold, wherein the first temperature threshold is lower than the second temperature threshold; controlling the heating member and the fan to stop working after a predetermined time of continuous baking. Thus, this method achieves both efficient and rapid baking of ingredients while preventing over-baking.

Further, the step of controlling the temperature of the baking chamber to be between a first temperature threshold and a second temperature threshold comprises: detecting a real-time temperature of the baking chamber; comparing the real-time temperature of the baking chamber with the first temperature threshold and the second temperature threshold, controlling the heating member to stop heating when the real-time temperature of the baking chamber is higher than the second temperature threshold, and controlling the heating member to continue heating when the real-time temperature of the baking chamber is lower than the first temperature threshold. In this way, the temperature of the baking chamber can be maintained between the first temperature threshold and the second temperature threshold.

Further, the step of controlling the baking device to feed the baked ingredients into the cup comprises: controlling the driving mechanism to rotate the baffle support so that the baffle support switches from the first state to the second state, the baffle support opening the discharge opening, and at the same time the feeding baffle opens the opening. Thus, the method enables automatic feeding of the baked ingredients from the baking chamber into the cup.

Further, the step of controlling the crushing assembly to crush the baked ingredients provided by the baking device comprises: controlling the crushing assembly to rotate in reverse to blend the baked ingredients provided by the baking device. Thus, the blades of the crushing assembly can be effectively protected, extending its service life.

Further, the food preparation method further comprises a step of adding water to the cup before the step of controlling the baking device to bake the ingredients in the baking chamber. Thus, liquid food can be prepared.

Further, a second heating member is provided at the bottom of the cup, the food preparation method further comprising the steps of: controlling the second heating member to heat water inside the cup; wherein, the step of controlling the second heating member to heat water inside the cup is executed at the same time as executing the step of controlling the baking device to bake an ingredient in the baking chamber; or, the step of controlling the second heating member to heat water inside the cup is executed before executing the step of controlling the baking device to bake an ingredient in the baking chamber; or, the step of controlling the second heating member to heat water inside the cup after executing the step of controlling the baking device to bake an ingredient in the baking chamber.

Another aspect of the present invention provides a computer-readable storage medium. The computer-readable storage medium stores a control program for food processor, wherein execution of the control program by a processor implements the steps of the food preparation method as described above.
Figure 1 is a schematic view in perspective of an embodiment of the food processor of the present invention;
Figure 2 is a schematic view in perspective of the food processor and baking device shown in Figure 1;
Figure 3 is an exploded view of the baking device shown in Figure 2;
Figure 4 is an exploded view of the feeder assembly shown in Figure 3;
Figures 5 and 6 are cross-sectional views of the feeder assembly shown in Figure 3 in different working states;
Figure 7 is a flow chart of the food preparation method of the present invention;
Figure 8 is a schematic view of a baking device of the prior art.

Exemplary embodiments will be described in detail herein, examples of which are shown in the accompanying drawings. When the following description refers to the drawings, the same numbers in different drawings represent the same or similar elements unless otherwise indicated. The modes of realization described in the following exemplary embodiments do not represent all modes of realization consistent with the present invention. Instead, they are merely examples of devices consistent with some aspects of the present invention as detailed in the appended claims.

The terms used in the present application are only for the purpose of describing specific embodiments and are not intended to limit the present invention. Unless otherwise defined, the technical terms or scientific terms used in the present application should be understood by those skilled in the art to which the present invention belongs. The words "one" or "a" and the like used in the specification and claims of the present invention do not indicate a quantitative limitation, but indicate the existence of at least one. Words such as "include" or "comprise" mean that the elements or objects appearing in front of "include" or "comprise" include the elements or objects listed after "include" or "comprise" and their equivalents, and do not exclude other elements or objects. Words such as "connect" or "connected" are not limited to physical or mechanical connections, and may include electrical connections, whether direct or indirect. The singular forms of "one", "said" and "the" used in the specification and the appended claims of the present application are also intended to include plural forms, unless the context clearly indicates other meanings. It should also be understood that the term "and/or" used herein refers to and includes any or all possible combinations of one or more associated listed items.

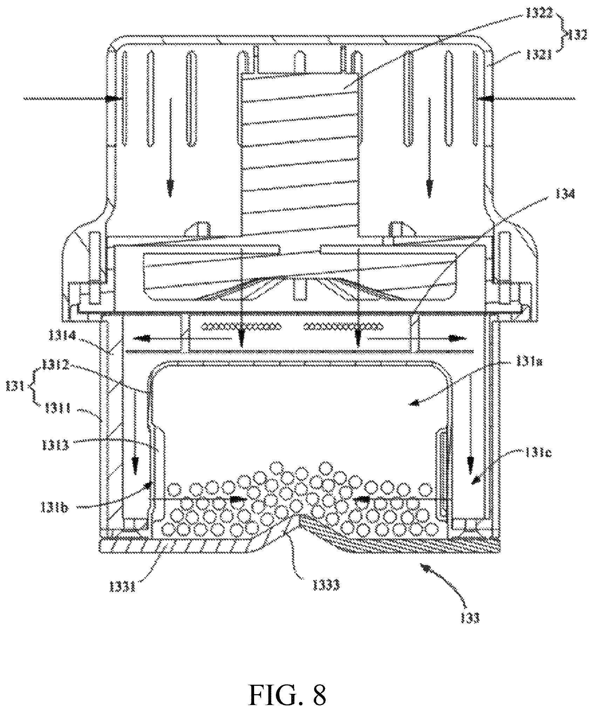

The prior art discloses a baking mechanism 130. **In** reference to Figure 8, the baking mechanism 130 comprises a housing 131, a heating member 134 and a valve 133. The housing 131 forms a baking chamber 131a with an opening at one end. A fan assembly 132 is used to direct hot airflow generated by the heating member 134 toward the baking chamber 131a, so as to reduce baking time. It can be clearly seen from Figure 8 that the heating member 134 is located above the baking chamber 131a. Hot airflow generated by the heating member 134 is more likely to rise upward due to its lower density. **In** other words, the hot airflow cannot easily enter the baking chamber 131a from an air inlet 131b through the air channel 131c on the side of the baking chamber 131a. Even under forced convection from the fan assembly 132, significant heat loss still occurs, resulting in low heating efficiency of the baking chamber 131a.

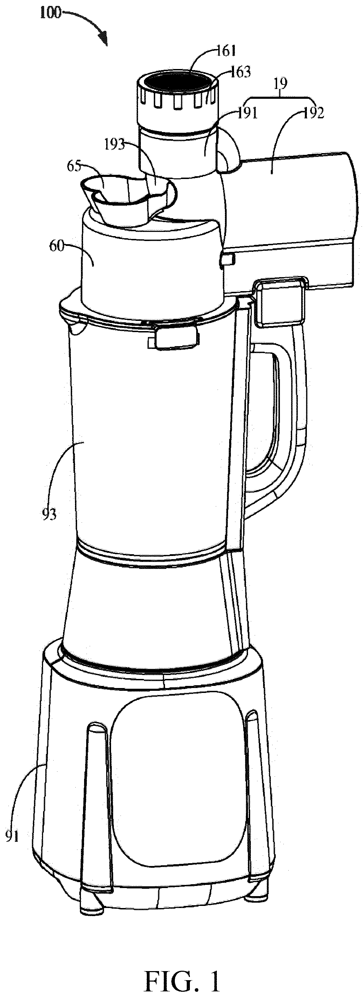

The present invention discloses a food processor 100. In reference to Figures 1 to 6, the food processor 100 can be a soymilk machine, a juicer, a high-speed blender, etc. The food processor 100 comprises a main machine 91, a cup 93 mounted on the main machine 91, and a baking device 95 provided to cover the cup 93.

The main machine 91 comprises a motor. The cup 93 is provided with a crushing assembly. The motor drives the crushing assembly to rotate to blend the ingredients. The crushing assembly can be a knife assembly or a grinding assembly, and is not limited thereto. The cup 93 is further provided with a heating member, which can be used to heat water in the present invention. The main machine 91 further comprises a control circuit board which supplies power and control signals to control the operation of the food processor 100. The baking device 95 is configured to supply baked ingredients to the cup 93.

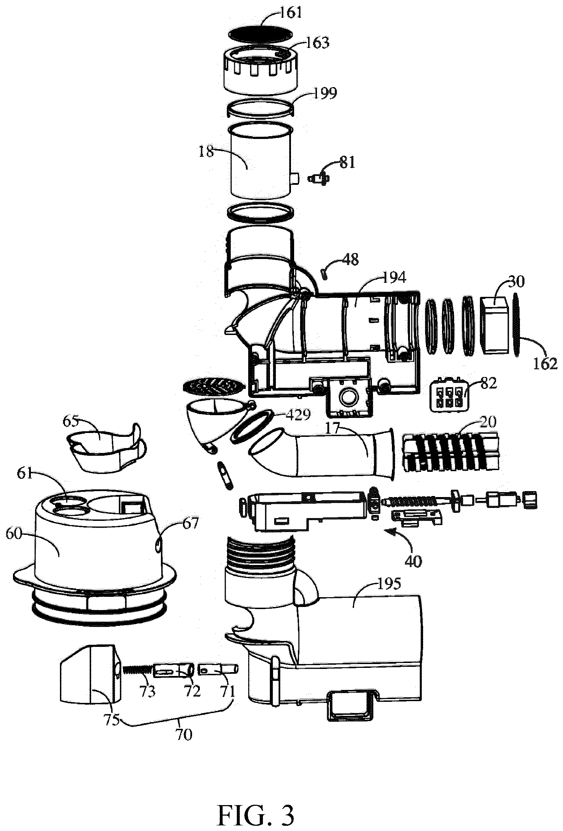

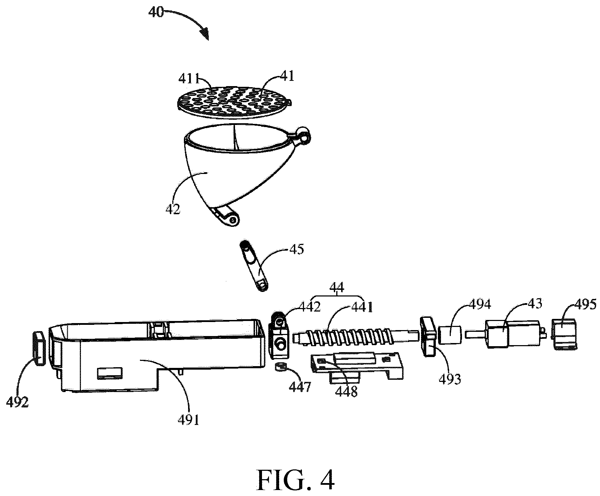

In reference to Figures 3 and 4, the baking device 95 comprises a housing assembly 10, a fan 30, a heating member 20 and a feeder assembly 40. The housing assembly 10 is provided with a baking chamber 11 having an opening 15 at the bottom end and an airflow channel 12 located below the baking chamber 11. The baking chamber 11 is used to bake ingredients (for example, beans and grains).

The fan 30 is arranged at an end of the airflow channel 12 away from the baking chamber 11. The airflow channel 12 connects an outlet of the fan 30 and the bottom end of the baking chamber 11. The heating member 20 is arranged in the airflow channel 12 and located between the fan 30 and the baking chamber 11. The heating member 20 is configured to heat the baking chamber 11.

When the baking device 95 starts to operate, the heating member 20 and the fan 30 are activated. The heating member 20 starts to heat up, and the fan 30 directs hot airflow around the heating member 20 toward the baking chamber 11. The hot airflow flows through the airflow channel 12 to the bottom end of the baking chamber 11 and enters the baking chamber 11 from its bottom end, thereby heating and baking the ingredients within the baking chamber 11.

The feeder assembly 40 is mounted in the housing assembly 10. The feeder assembly 40 is used for opening and closing the opening 15. Before baking starts, the opening 15 is closed by the feeder assembly 40. After baking ends, the feeder assembly 40 opens the opening 15 to discharge the baked ingredients into the cup 93.

In the heating device 95 of the present invention, since the housing assembly 10 is provided with the baking chamber 11, and hot airflow around the heating member 20 is blown into the baking chamber 11 by the fan 30 to bake the ingredients inside the baking chamber 11. Thus this method ensures uniform heating and high efficiency. In addition, after baking, the ingredients inside the baking chamber 11 can be fed into the cup 93 through the feeder assembly 40. In this way, during the food preparation with the food processor 100, the ingredients can be baked by the baking device 95 before blending. The cup 93 only needs to blend and crush the ingredients, so that prolonged boiling is avoided, which significantly reduces food preparation time. At the same time, since extended boiling of the ingredients is no longer necessary, even if the height of the cup 93 is reduced, the ingredients will not overflow, which is also conducive to making the cup 93 shorter and more compact. Moreover, since the airflow channel 12 is located below the baking chamber 11 and connects the air outlet side of the fan 30 and the bottom end of the baking chamber 11, the hot airflow in the airflow channel 12 enters the baking chamber 11 from the bottom end of the baking chamber 11. Since the hot airflow is less dense, it naturally rises upward after entering the baking chamber 11, so that the ingredients in the baking chamber 11 can be heated more quickly and efficiently.

In an embodiment, the airflow channel 12 is arranged in a horizontal direction. In another embodiment, the airflow channel 12 is arranged in a vertical direction. In yet another embodiment, the airflow channel 12 first extends in a horizontal direction and then in a vertical direction. The above are only examples and the present invention is not limited thereto.

In reference to Figures 4 to 6, the feeder assembly 40 comprises a feeding baffle 41 for opening or closing the opening 15. The feeding baffle 41 is provided with a plurality of air holes 411 connecting the airflow channel 12 and the baking chamber 11. In this way, by controlling the feeding baffle 41, the baked ingredients in the baking chamber 11 can be discharged into the cup 93, rendering the operation convenient. In addition, the hot airflow enters the baking chamber 11 through the air holes 411 on the feeding baffle 41, which is equivalent to the hot airflow entering the baking chamber 11 from the bottom surface of the baking chamber 11, resulting in better heating effect on the ingredients.

Preferably, the area of the air holes 411 ranges between 0.5 square millimeters and 13 square millimeters. This dimensional range can prevent ingredients from leaking out of the air holes 411, while ensuring rapid hot airflow entering the baking chamber 11, thereby ensuring the baking efficiency.

In some embodiments, the area of the air holes 411 may be 0.5 square millimeters, 2 square millimeters, 4 square millimeters, 6 square millimeters, 8 square millimeters, 10 square millimeters, 12 square millimeters, 13 square millimeters, or any value between any two adjacent ones of the above. The shape of the air holes 411 can be circular, square, oval, or irregular shapes, and is not limited herein.

In reference to Figure 4, the feeder assembly 40 comprises a baffle support 42 and a driving mechanism. The feeding baffle 41 is provided on the baffle support 42. The baffle support 42 is rotatably connected to the housing assembly 10. In this embodiment, the baffle support 42 is rotatably connected to the housing assembly 10 by means of a rotary shaft 48.

The driving mechanism drives the baffle support 42 to switch between a first state and a second state by rotation. The feeding baffle 41 closes the opening 15 when the baffle support 42 is in the first state, and opens the opening 15 when the baffle support 42 is in the second state. Thus, by driving the baffle support 42 to switch between the first state and the second state via the driving mechanism, the opening 15 can be closed or opened by the feeding baffle 41, rendering the operation convenient.

In the illustrated embodiment, the driving mechanism comprises a motor 43, a screw-slider assembly 44 and a rod 45. The screw-slider assembly 44 comprises a screw 441 connected to the motor 43 and a slider 442 threaded to the screw 441. The rod 45 is respectively connected with the slider 442 and the baffle support 42 at its two ends. The motor 43 rotates, driving the screw 441 to rotate, which causes the slider 442 to perform linear reciprocating motion along the screw 441, thereby driving the rod 45 to move accordingly. The rod 45 drives the baffle support 42 to switch between the first state and the second state. Thus, the structure of the driving mechanism is simple and reliable.

Specifically, the driving mechanism further comprises a support frame 491 fixed to the housing assembly 10, and a first support block 492 and a second support block 493 fixed to the support frame 491. The two ends of the screw 441 rotatably cooperate with the first support block 492 and the second support block 493. The first support block 492 and the second support block 493 support the screw 441 and limit its position. The motor 43 is fixed to the support frame 491 through a fixing plate 495. A motor shaft of the motor 43 is connected to the screw 441 through a coupling 494.

Furthermore, the driving mechanism further comprises a magnet 447 arranged on the slider 442 and a position sensor 448 fixed to the support frame 491 or the housing assembly 10. By monitoring the position of the slider 442, the rotational position of the baffle support 42 can be precisely controlled. This ensures that the feeding baffle 41 completely closes the opening 15, or the feeding baffle 41 completely opens the opening 15.

In reference to Figures 3, 5 and 6, the housing assembly 10 comprises a shell 19, an inner cylinder 18 and an air duct 17. The shell 19 comprises a first portion 191 extending in a vertical direction and a second portion 192 extending in a horizontal direction. The second portion 192 is connected with the lower end of the first portion 191. The inner cylinder 18 is provided within the first portion 191 and forms the baking chamber 11. The air duct 17 is provided in the second portion 192. The air duct 17 defines and forms the airflow channel 12. The heating member 20 is provided in the air duct 17. The fan 30 is provided at the end of the air duct 17. The fan 30 blows the hot airflow generated by the heating member 20 toward the first portion 191. Upon reaching the vertically-extending first section 191, the hot airflow will automatically rise, so as to quickly enter the baking chamber 11 to bake the ingredients. This configuration improves the baking efficiency while maintaining rational structural design of the housing assembly 10.

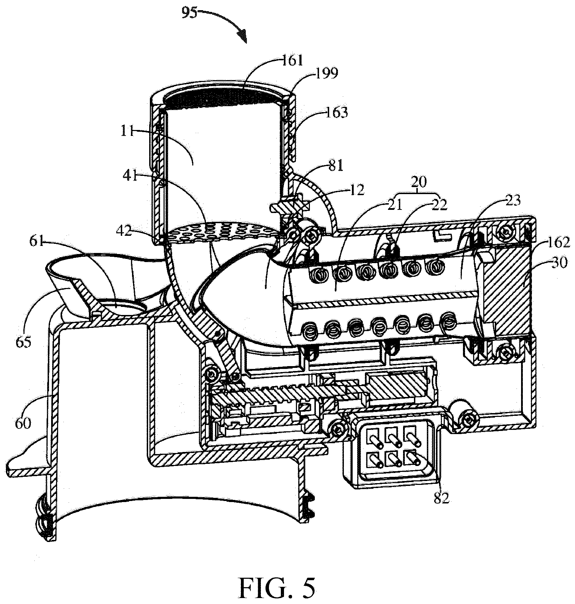

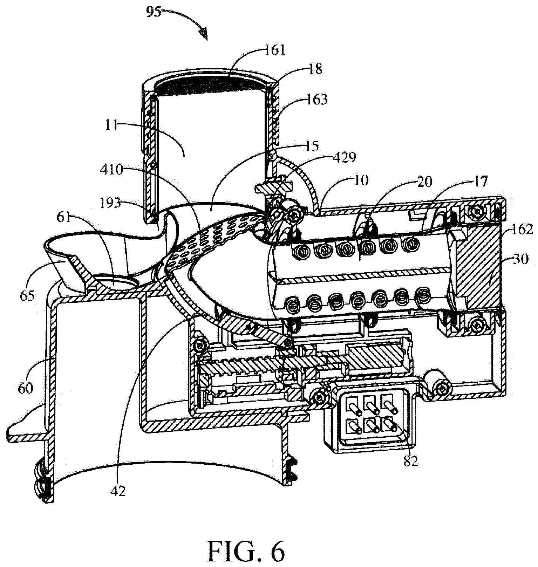

In reference to Figure 5, the shell 19 comprises a discharge opening 193 provided below the inner cylinder 18. The baffle support 42 closes the discharge opening 193 in the first state. At the same time, the feeding baffle 41 closes the opening 15. In reference to Figure 6, the baffle support 42 opens the discharge opening 193 in the second state, and at the same time, the feeding baffle 41 opens the opening 15.

When the baffle support 42 switches from the first state to the second state, the opening 15 and the discharge opening 193 are simultaneously opened. At this time, the ingredients in the baking chamber 11 flow out of the baking device 95 sequentially through the opening 15 and the discharge opening 193 and eventually into the cup 93. Thus, by controlling the baffle support 42, the ingredients in the baking chamber 11 can be automatically fed into the cup 93, without the need for manual operations.

When the baffle support 42 is switched to the second state by rotation, the feeding baffle 41 is rotated together with it to form a guiding slope 410. At this time, one end of the feeding baffle 41 is located at the lower edge of the baking chamber 11, and another end is located at the lower edge of the discharge opening 193. Thus, during the process where ingredients flow out of the baking device 95 from the opening 15 and the discharge opening 193, the feeding baffle 41 can further play a role of guiding the flow.

The baffle support 42 is arranged on the outer side of the air duct 17. The baffle support 42 and the air duct 17 are sealed by a first sealing ring 429. The baffle support 42 in the first state and the air duct 17 form the airflow channel 12 together. Thus, by creating a seal between the baffle support 42 and the air duct 17 by means of the first sealing ring 429, hot airflow is prevented from entering other areas of the baking device 95, which can ensure the baking efficiency of ingredients in the baking chamber 11.

The heating member 20 comprises a support 21 formed by mica sheet and a heating wire 22 wound around the support 21. An air passage 23 for airflow to pass is provided between the support 21 and the heating wire 22. By providing the air passage 23, it can be ensured that hot airflow smoothly reaches the baking chamber 11 when being blown by the fan 30. The support 21 is formed by a plurality of mica sheets fixed together. The air passage 23 for hot airflow to pass through is provided between every two adjacent mica sheets.

In reference to Figures 5 and 6, the housing assembly 10 further comprises an air outlet grille 161 provided at one end of the first portion 191 and an air inlet grille 162 provided at one end of the second portion 192. The air outlet grille 161 covers an opening on top of the inner cylinder 18. The air inlet grille 162 is provided at the inlet side of the fan 30. By providing the air outlet grille 161 and the air inlet grille 162, air circulation can be established in the housing assembly 10. This ensures continuous intake of fresh air through the air inlet grille 162 into the airflow channel 12 where it is heated by the heating member 20 to form hot airflow. At the same time, hot airflow having heated the ingredients is discharged through the air outlet grille 161. Such a cycle improves the heating efficiency.

In an embodiment, the housing assembly 10 further comprises an end cap 163 detachably provided at one end of the first portion 191. The air outlet grille 161 is sandwiched between the first portion 191 and the end cap 163. Thus, by detaching the end cap 163 and then removing the air outlet grille 161, ingredients can be easily added into the baking chamber 11 through the top opening of the inner cylinder 18. The end cap 163 is fixed to the first portion 191 by means of a thread structure, a clip, a twist buckle, etc.

In reference to Figure 3, the shell 19 comprises a left half-shell 194 and a right half-shell 195 connected with the left half-shell 194. The left half-shell 194 and the right half-shell 195 are secured together by means of fixing rings and/or fasteners and/or clips. By providing the shell 19 as a structure with connected left half-shell 194 and right half-shell 195, the inner cylinder 18 and the air duct 17 can be conveniently mounted into the shell 19. In the illustrated embodiment, but without being limited thereto, the left half-shell 194 and the right half-shell 195 are fixed together by means of a fixing ring 199 at the top end of the first portion 191, and by screws at other positions.

In reference to Figures 5 and 6, the baking device 95 further comprises a cover 60. The cover 60 is provided with a feeding hole 61 corresponding to the discharge opening 193, and the vertical projection of the discharge opening 193 on the cover 60 is offset from the feeding hole 61. With the vertical projection of the discharge opening 193 on the cover 60 offset from the feeding hole 61, steam generated by hot water in the cup 93 will not enter the baking device 95 through the discharge opening 193. Thus, the safety of the baking device 95 is ensured. After all the baked ingredients are fed into the cup 93, the baffle support 42 is controlled to switch back to the first state to close the discharge opening 193, which better prevents steam from entering the baking device 95.

The baking device further comprises a guide member 65. The guide member 65 surrounds the discharge opening 193 and the feeding hole 61. By providing the guide member 65, when feeding ingredients from the baking chamber 11 into the cup 93, all the ingredients can be guided into the cup 93.

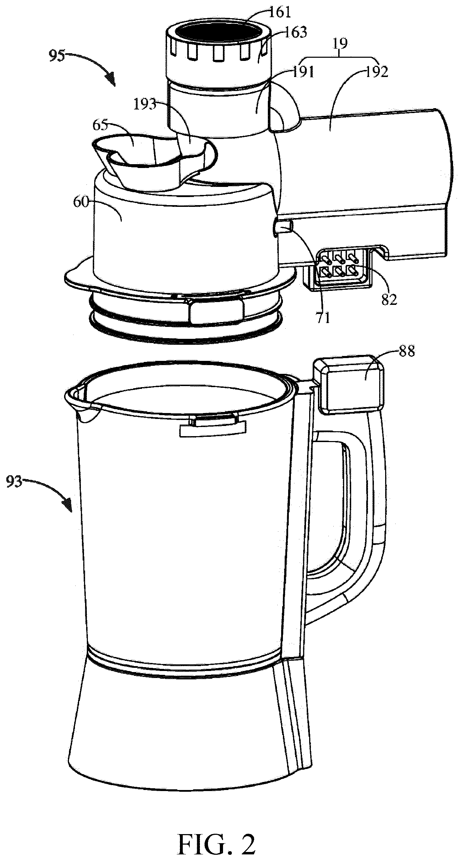

In reference to Figures 2 and 3, the cover 60 is provided with a locking assembly 70. The locking assembly 70 comprises a locking member 71, a guiding member 72 and an elastic reset member 73. The cover 60 is provided with a through-hole 67, which correspondingly cooperates with the locking member 71. The locking member 71 is telescopically provided in the guiding member 72. The elastic reset member 73 exerts an elastic force on the locking member 71 such that the locking member 71 extends out of the through-hole 67 of the cover 60 and locks with the housing assembly 10. Thus, by providing the locking assembly 70, the cover 60 and the housing assembly 10 can be securely locked together, preventing the cover 60 and the housing assembly 10 from disengaging due to excessive vibration during the operation of the food processor, thereby rendering the food processor 100 more stable and reliable during use.

In the illustrated embodiment, the locking assembly 70 further comprises a locking support 75. The guiding member 72 is fixed to the locking support 75. In a working state, the locking member 71 extends from the through-hole 67 of the cover 60 and locks with the housing assembly 10. When the baking device 95 needs to be removed, the locking member 71 is pressed to disengage the locked state between the locking member 71 and the housing assembly 10, so that the housing assembly 10 and the cover 60 can be removed respectively. The elastic reset member 73 comprises any of the following: a spring, an elastic rubber member, a metal snap, without being limited thereto.

The housing assembly 10 further comprises a temperature sensor 81 and a coupler 82 electrically connected to the temperature sensor 81. The temperature sensor 81 extends into the inner cylinder 18. The coupler 82 is fixed to the shell 19. This configuration enables real-time temperature monitoring in the baking chamber 11 by means of the temperature sensor 81. The inner cylinder 18 and the shell 19 are provided with holes for the temperature sensor 81 to pass through. A docking coupler 88 is provided at the top of the handle of the cup 93. The docking coupler 88 is electrically connected to a control circuit board provided on the main machine 91. The coupler 82 mates with the docking coupler 88 to achieve electrical connection. The real-time temperature of the baking chamber 11 collected by the temperature sensor 81 can be transmitted to the control circuit board through the coupler 82 and the docking coupler.

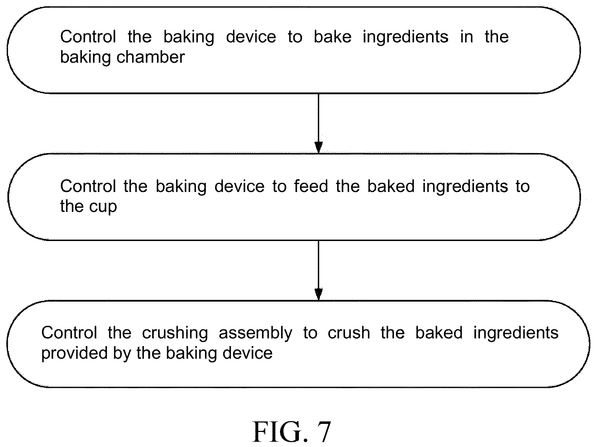

The present invention further provides a food preparation method, applied to the food processor described above. In reference to Figure 7, the food preparation method comprises the following steps:
step S10: controlling the baking device 95 to bake ingredients in the baking chamber 11;
step S20: controlling the baking device 95 to feed the baked ingredients into the cup 93;
step S30: controlling the crushing assembly to crush the baked ingredients provided by the baking device.

With the food preparation method of the present invention, the ingredients can be baked by the baking device 95 before being blended, and needs only to be blended and crushed in the cup 93 by controlling the crushing assembly. Thus, no prolonged boiling is required. The food preparation method can significantly reduce the total food preparation time by the food processor 100, and prevent overflow of the ingredients by eliminating extended liquid heating phase.

The step of controlling the baking device 95 to bake ingredients in the baking chamber 11 comprises: controlling the heating member 20 and the fan 30 to start working; controlling the temperature of the baking chamber 11 to be between a first temperature threshold and a second temperature threshold, wherein the first temperature threshold is lower than the second temperature threshold; controlling the heating member 20 and the fan 30 to stop working after a predetermined time of continuous baking. Thus, this method achieves both efficient and rapid baking of ingredients while preventing over-baking.

In some preferred embodiments, the first temperature threshold is between 90°C and 200°C, and the second temperature threshold is between 100°C and 220°C. But the present invention is not limited thereto.

The step of controlling the temperature of the baking chamber 11 to be between a first temperature threshold and a second temperature threshold comprises: detecting a real-time temperature of the baking chamber 11; comparing the real-time temperature of the baking chamber 11 with the first temperature threshold and the second temperature threshold, controlling the heating member 20 to stop heating when the real-time temperature of the baking chamber 11 is higher than the second temperature threshold, and controlling the heating member 20 to continue heating when the real-time temperature of the baking chamber is lower than the first temperature threshold. In this way, the temperature of the baking chamber 11 can be maintained between the first temperature threshold and the second temperature threshold.

The step of controlling the baking device to feed the baked ingredients into the cup comprises: controlling the driving mechanism to rotate the baffle support 42 so that the baffle support 42 switches from the first state to the second state, the baffle support 42 opening the discharge opening 193, and at the same time the feeding baffle 41 opening the opening 15. Thus, the method enables automatic feeding of the baked ingredients from the baking chamber 11 into the cup 93.

The step of controlling the crushing assembly to crush the baked ingredients provided by the baking device 95 comprises: controlling the crushing assembly to rotate in reverse to blend the baked ingredients provided by the baking device 95. In this embodiment, there is no need to add water to the cup 93. After the baking device has fed the baked ingredients to the cup 93, the blending assembly is controlled to rotate in reverse to directly blend and crush the baked ingredients, thereby achieving the production of cooked powder. In this embodiment, the crushing assembly is a knife assembly. The main machine 91 controls the knife assembly to rotate in reverse, which can effectively protect the cutting edges of each blade of the knife assembly and prolong its service life.

In an embodiment, the food preparation method further comprises a step of adding water to the cup 93 before the step of controlling the baking device to bake the ingredients in the baking chamber. Thus, liquid food such as soymilk can be prepared.

A second heating member is provided at the bottom of the cup 93. The food preparation method further comprising the steps of: controlling the second heating member to heat water inside the cup 93; wherein, the step of controlling the second heating member to heat water inside the cup is executed at the same time as executing the step of controlling the baking device to bake an ingredient in the baking chamber; or, the step of controlling the second heating member to heat water inside the cup is executed before executing the step of controlling the baking device to bake an ingredient in the baking chamber; or, the step of controlling the second heating member to heat water inside the food processing cup after executing the step of controlling the baking device to bake an ingredient in the baking chamber.

In addition, the present invention further provides a computer-readable storage medium. The computer-readable storage medium stores a control program for food processor. The execution of the control program by a processor implements the steps of the food preparation method as described above.

What has been described above are merely preferred embodiments of the present invention and are not intended to limit the present invention. Any modifications, equivalent substitutions, improvements, etc. made within the spirit and principles of the present invention shall be included in the scope of protection of the present application.

## Claims

1. A baking device, **characterized in that** it comprises:
- a housing assembly (10), provided with a baking chamber (11) having an opening (15) at the bottom end and an airflow channel (12) located below the baking chamber (11);
- a fan (30), provided at an end of the airflow channel (12) away from the baking chamber (11), the airflow channel (12) connecting an outlet of the fan (30) and the bottom end of the baking chamber (11);
- a heating member (20), provided in the airflow channel (12) and located between the fan (30) and the baking chamber (11), the heating member (20) being used to heat the baking chamber (11); and
- a feeder assembly (40) mounted in the housing assembly (10), the feeder assembly (40) being used for opening and closing the opening (15).

2. The baking device according to claim 1, **characterized in that** the feeder assembly (40) comprises a feeding baffle (41) for opening or closing the opening (15), the feeding baffle (41) comprising a plurality of air holes (411) connecting the airflow channel (12) and the baking chamber (11).

3. The baking device according to claim 2, wherein the feeder assembly (40) further comprises a baffle support (42) and a driving mechanism, the feeding baffle (41) being provided on the baffle support (42) and the baffle support (42) being rotatably connected to the housing assembly (10);
the driving mechanism driving the baffle support (42) to switch between a first state and a second state by rotation, the feeding baffle (41) closing the opening (15) when the baffle support (42) is in the first state, and the feeding baffle (41) opening the opening (15) when the baffle support (42) is in the second state.

4. The baking device according to claim 3, wherein the driving mechanism comprises a motor (43), a screw-slider assembly (44) and a rod (45), the screw-slider assembly (44) comprising a screw (441) connected to the motor (43) and a slider (442) threaded to the screw (441), the rod (45) being respectively connected with the slider ( 442) and the baffle support (42) at its two ends.

5. The baking device according to claim 3, wherein the housing assembly (10) comprises a shell (19), an inner cylinder (18) and an air duct (17), the shell (19) comprising a first portion (191) extending in a vertical direction and a second portion (192) extending in a horizontal direction, the inner cylinder (18) being provided within the first portion (191) and forming the baking chamber (11), the air duct (17) being provided in the second portion (192), the air duct (17) defining and forming the airflow channel (12), the heating member (20) being provided in the air duct (17), and the fan (30) being provided at the end of the air duct (17).

6. The baking device according to claim 5, wherein the shell (19) comprises a discharge opening (193) provided below the inner cylinder (18), the baffle support (42) closing the discharge opening (193) in the first state and the baffle support (42) opening the discharge opening (193) in the second state.

7. The baking device according to claim 6, wherein when the baffle support (42) is switched to the second state by rotation, the feeding baffle (41) is rotated together with the baffle support to form a guiding slope.

8. The baking device according to claim 6, wherein the baffle support (42) is arranged on the outer side of the air duct (17), the baffle support (42) and the air duct (17) being sealed by a first sealing ring (429), the baffle support (42) in the first state and the air duct (17) forming the airflow channel (12) together.

9. The baking device according to claim 5, wherein the heating member (20) comprises a support (21) formed by mica sheet and a heating wire (22) wound around the support (21), an air passage (23) for airflow to pass being provided between the support (21) and the heating wire (22).

10. The baking device according to claim 5, wherein the housing assembly (10) further comprises an air outlet grille (161) provided at one end of the first portion (191) and an air inlet grille (162) provided at one end of the second portion (192), the air outlet grille (161) covering an opening on top of the inner cylinder (18), the air inlet grille (162) being provided at the inlet side of the fan (30).

11. The baking device according to claim 9, wherein the housing assembly (10) further comprises an end cap (163) detachably provided at one end of the first portion (191), the air outlet grille (161) being sandwiched between the first portion (191) and the end cap (163).

12. The baking device according to claim 5, wherein the shell (19) comprises a left half-shell (194) and a right half-shell (195) connected with the left half-shell (194), the left half-shell (194) and the right half-shell (195) being secured together by means of fixing rings (199) and/or fasteners and/or clips.

13. The baking device according to claim 6, wherein the baking device further comprises a cover (60), the cover (60) being provided with a feeding hole (61) corresponding to the discharge opening (193), and the vertical projection of the discharge opening (193) on the cover (60) being offset from the feeding hole (61).

14. The baking device according to claim 13, wherein the baking device further comprises a guide member (65), the guide member (65) surrounding the discharge opening (193) and the feeding hole (61).

15. The baking device according to claim 13, wherein the cover (60) is provided with a locking assembly (70), the locking assembly (70) comprising a locking member (71), a guiding member (72) and an elastic reset member (73), the cover (60) being provided with a through-hole (67) which correspondingly cooperates with the locking member (71), the locking member (71) being telescopically provided in the guiding member (72), the elastic reset member (73) exerting an elastic force on the locking member (71) such that the locking member (71) extends out of the through-hole (67) of the cover (60) and locks with the housing assembly (10).

16. The baking device according to claim 5, wherein the housing assembly (10) further comprises a temperature sensor (81) and a coupler (82) electrically connected to the temperature sensor (81), the temperature sensor (81) extending into the inner cylinder (18), the coupler (82) being fixed to the shell (19).

17. The baking device according to claim 2, wherein the air hole (411) has an area ranging between 0.5 square millimetres and 13 square millimetres.

18. The baking device according to any one of claims 1 to 17, wherein the airflow channel (12) is arranged in a horizontal direction; or, the airflow channel (12) is arranged in a vertical direction.

19. A food processor, **characterized in that** it comprises:
- a main machine (91);
- a cup (93) mounted on the main machine (91), the cup (93) being provided with a crushing assembly; and
- the baking device according to any one of claims 1-18, provided to cover the cup (93), the baking device being configured to supply baked ingredients to the cup (93).

20. A food preparation method, applied to the food processor of claim 19, **characterized in that** the food preparation method comprises the following steps:
- controlling the baking device to bake ingredients in the baking chamber;
- controlling the baking device to feed the baked ingredients into the cup;
- controlling the crushing assembly to crush the baked ingredients provided by the baking device.

21. The food preparation method according to claim 20, wherein the step of controlling the baking device to bake ingredients in the baking chamber comprises:
- controlling the heating member (20) and the fan (30) to start working;
- controlling the temperature of the baking chamber (11) to be between a first temperature threshold and a second temperature threshold, wherein the first temperature threshold is smaller than the second temperature threshold;
- controlling the heating member (20) and the fan (30) to stop working after a predetermined time of continuous baking.

22. The food preparation method according to claim 21, wherein the step of controlling the temperature of the baking chamber (11) to be between the first temperature threshold and the second temperature threshold comprises:
- detecting a real-time temperature of the baking chamber (11);
- comparing the real-time temperature of the baking chamber (11) with the first temperature threshold and the second temperature threshold, controlling the heating member (20) to stop heating when the real-time temperature of the baking chamber (11) is higher than the second temperature threshold, and controlling the heating member (20) to continue heating when the real-time temperature of the baking chamber (11) is lower than the first temperature threshold.

23. The food preparation method according to claim 20, wherein the step of controlling the baking device to feed the baked ingredients into the cup comprises:
- controlling the driving mechanism to rotate the baffle support so that the baffle support switches from the first state to the second state, the baffle support (42) opens the discharge opening (193), and at the same time the feeding baffle (41) opens the opening (15).

24. The food preparation method according to claim 20, wherein the step of controlling the crushing assembly to crush the baked ingredients provided by the baking device comprises: controlling the crushing assembly to rotate in reverse to blend the baked ingredients provided by the baking device.

25. The food preparation method according to claim 20, further comprising a step of adding water to the cup before the step of controlling the baking device to bake the ingredients in the baking chamber.

26. The food preparation method according to claim 25, wherein a second heating member is provided at the bottom of the cooking cup (93), the food preparation method further comprising the steps of:
- controlling the second heating member to heat the water inside the cooking cup (93);
wherein
executing the step of controlling the second heating member to heat the water inside the cup (93) at the same time as executing the step of controlling the baking device (95) to bake the ingredients in the baking chamber (11); or
executing the step of controlling the second heating member to heat the water inside the cup (93) before executing the step of controlling the baking device (95) to bake the ingredients in the baking chamber (11); or
executing the step of controlling the second heating member to heat the water inside the cup (93) after executing the step of controlling the baking device (95) to bake the ingredients in the baking chamber (11).

27. A computer-readable storage medium **characterized in that** the computer-readable storage medium stores a control program for food processor, wherein execution of the control program by a processor implements the steps of the food preparation method according to any one of claims 20 to 26.
